(19) Europäisches Patentamt
European Patent Office
Office européen des brevets

(11) **EP 3 742 136 A1**

(12) **EUROPÄISCHE PATENTANMELDUNG**

(43) Veröffentlichungstag:
**25.11.2020   Patentblatt 2020/48**

(51) Int Cl.:
***G01J 5/00*** *(2006.01)*

(21) Anmeldenummer: **20166616.1**

(22) Anmeldetag: **30.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.05.2019   DE 102019113691**

(71) Anmelder: **Universität Kassel
34125 Kassel (DE)**

(72) Erfinder:
 • **Kroll, Andreas, Prof. Dr.
   34131 Kassel (DE)**
 • **Schramm, Sebastian
   34246 Vellmar (DE)**

(74) Vertreter: **Patentanwälte Walther Hinz Bayer PartGmbB
Heimradstrasse 2
34130 Kassel (DE)**

(54) **VERFAHREN UND VORRICHTUNG ZUM ERZEUGEN EINES DREIDIMENSIONALEN THERMOGRAMMS**

(57)   Gegenstand der Erfindung ist ein Verfahren und eine Vorrichtung zum Erzeugen eines dreidimensionalen Thermogramms einer Objektoberfläche (10), wobei das Verfahren wenigstens die folgenden Schritte umfasst:
- Erfassen (100) von geometrischen Daten eines Objekts (1) und Erstellen eines dreidimensionalen Modells des Objekts (1) anhand der erfassten geometrischen Daten,
- Erfassen (200) von Wärmestrahlungsmesswerten für Aufpunkte (11) auf der Objektoberfläche (10), wobei je Aufpunkt (11) eine Mehrzahl von Wärmestrahlungsmesswerten aus unterschiedlichen Blickrichtungen (30) auf die Objektoberfläche (10) erfasst wird,
- Zuordnen (300) der Wärmestrahlungsmesswerte für die Aufpunkte (11) auf der Objektoberfläche zu Aufpunkten auf der zugehörigen Oberfläche des dreidimensionalen Modells des Objekts (1), wobei jedem Wärmestrahlungsmesswert ein Zenitwinkel (2) zwischen der Blickrichtung (30) und der Oberflächennormale (12) im zugehörigen Aufpunkt (11) zugeordnet wird,
- Modellieren (400) des Emissionsgrades der Objektoberfläche (10) je Aufpunkt (11) anhand der Abhängigkeit der Wärmestrahlungsmesswerte von den zugehörigen Zenitwinkeln (2), und
- Modellieren (500) der Temperatur der Objektoberfläche (10) je Aufpunkt (11) anhand der Wärmestrahlungsmesswerte, der Zenitwinkel (2) und des Emissionsgrades, und Ausgeben (501) des dreidimensionalen Thermogramms.

Fig. 1

**Beschreibung**

Die Erfindung betrifft ein Verfahren und eine Vorrichtung zum Erzeugen eines dreidimensionalen Thermogramms einer Objektoberfläche.

STAND DER TECHNIK

Die Infrarotthermografie ist eine weit verbreitete Methode zur Messung von Temperaturverteilungen auf Objektoberflächen. Neuere Verfahren zur gleichzeitigen Messung von Temperatur und geometrisch dreidimensionalen Informationen wurden im Laufe des letzten Jahrzehnts entwickelt. Sowohl in der klassischen Infrarotthermografie, als auch in den neuen 3D-Verfahren, ist die Kenntnis des Emissionsgrades $\varepsilon$ der betrachteten Objektoberfläche der zentrale Faktor für die Bestimmung der Oberflächentemperatur des untersuchten Objekts aus den Wärmestrahlungsmesswerten einer Thermografiekamera. Da eine einfache Umrechnung zwischen in die Kamera einfallender Strahlung und der Oberflächentemperatur nur bei einem idealisierten schwarzen Strahler mit Emissionsgrad $\varepsilon = 1$ gilt, muss der tatsächliche Emissionsgrad der untersuchten Objektoberfläche für korrekte Temperaturmessungen im Stand der Technik zwingend vor der thermografischen Messung bestimmt werden und ist üblicherweise ein Einstellparameter für die verwendete Kamera.

Grundsätzlich wird der Emissionsgrad der zu untersuchenden Oberfläche im Stand der Technik mit einem der vier Prinzipien Referenzemitter, Referenztemperatur, Messung bei zwei bekannten Temperaturpunkten oder durch die Messung der Reflektivität ermittelt, siehe R. P. Madding, "Emissivity measurement and temperature correction accuracy considerations", in Thermosense XXI, Band 3700, 1999, S. 393-402. Daraus ergeben sich für die industrielle Praxis die Verfahren mit materialabhängiger Wertetabelle, Referenzklebeband/-lackierung, berührender Referenzmessung oder der Vergleichsmessung mittels eines zusätzlich in das Messobjekt gebohrten Lochs, siehe M. Vollmer und K.-P. Möllmann, Infrared Thermal Imaging: Fundamentals, Research and Applications, 2. Auflage, Weinheim: Wiley-VCH, 2018. Besonders bei den häufig verwendeten Wertetabellen gibt es große Unsicherheiten, da der Anwender Material und Zustand der zu untersuchenden Objektoberfläche genau kennen muss. Selbst dann wird ein großer Bereich angegeben, in dem der wahre Emissionsgrad liegen kann (z.B. oxidiertes Kupfer $\varepsilon = 0{,}2$ bis $0{,}7$, siehe T. Zimmermann und M. Zimmermann, Lehrbuch der Infrarotthermografie, 1. Auflage, Stuttgart: Fraunhofer IRB Verlag, 2012). Alle diese im Stand der Technik verwendeten Verfahren sind entweder qualitativ, berührend oder invasiv, woraus Nachteile für viele praktische Anwendungen folgen.

Daher sind Verfahren von Interesse, die möglichst berührungslos, rückwirkungsfrei und ohne Mehraufwand den Emissionsgrad ermitteln und somit erlauben mittels Thermografiekameras Thermogramme, d.h. quantitativ korrekte Oberflächentemperaturverteilungen, zu bestimmen. Die Messung des Reflexionsgrades p, mit dem der Emissionsgrad direkt bestimmt werden kann ($\varepsilon + \rho = 1$ für opake Körper), wird durch die sogenannte Thermoreflektometrie beschrieben. Diese wird im nahen Infrarotbereich (NIR, 0,78 bis 1,4 $\mu$m) durch Laserquellen realisiert, siehe D. Hernandez, J. Badie, F. Escourbiac und R. Reichte, "Development of two-colour pyroreflectometry technique for temperature monitoring of tungsten plasma facing components", Fusion Engineering and Design, Band 83, Nr. 4, S. 672-679, 2008, und T. Sentenac, R. Gilblas, D. Hernandez und Y. Le Maoult, "Bi-color near infrared thermoreflectometry: A method for true temperature field measurement", Review of Scientific Instruments, Band 83, Nr. 12, S. 1-14, 2012, und Petrocelli, T. Sentenac und Y. Le Maoult, "3D Thermal Imaging: An approach towards true field temperature measurement", in 12th Quantitative InfraRed Thermography Conference, Bordeaux, France, 2014. Durch einen starren Aufbau sind die thermoreflektometrischen Systeme ortsfest und zusätzlich nur bei hohen Temperaturen der Objektoberfläche einsetzbar ($T_{obj} > 550$ K). In R. Albatici, F. Passerini, A. M. Tonelli und S. Gialanella, "Assessment of the thermal emissivity value of building materials using an infrared thermovision technique emissometer", Energy and Buildings, Band 66, S. 33-40, 2013, und J.-P. Monchau, M. Marchetti, L. Ibos, J. Dumoulin, V. Feuillet und Y. Candau, "Infrared emissivity measurements of building and civil engineering materials: a new device for measuring emissivity", International Journal of Thermophysics, Band 35, Nr. 9-10, S. 1817-1831, 2014, werden definierte Wärmestrahler (sog. Emissometer) genutzt, um den Emissionsgrad über die Reflektivität der Wärmestrahlung im langwelligen Spektralbereich (LWIR, 7,5 bis 15 $\mu$m) zu bestimmen. Jedoch wirkt das Emissometer durch die eigene Strahlung im betrachteten Wellenlängenbereich auf die Oberfläche zurück und muss für die Messung auf das Messobjekt aufgesetzt werden. Ein ähnlich aufgebautes Emissometer (ET-100 Thermal Handheld Emissometer, Surface Optics Corporation) wird bereits vertrieben, wodurch die kommerzielle Bedeutung des Themas verdeutlicht wird.

Ein berührungsloses und nicht-invasives Verfahren liefert die Übertragung des Messprinzips der Zwei-Farben-Pyrometrie auf Wärmebildkameras, siehe M. Vollmer und K.-P. Möllmann, Infrared Thermal Imaging: Fundamentals, Research and Applications, 2. Auflage, Weinheim: Wiley-VCH, 2018. Dabei werden die Objektoberflächen idealisiert als graue Körper mit einem von der Wellenlänge unabhängigen Emissionsgrad angenommen, was jedoch im langwelligen Spektralbereich, in dem günstige und transportable Infrarotkameras arbeiten, zu größeren Fehlern führt, siehe M. Musto, G. Rotondo, M. de Cesare, A. Del Vecchio, L. Savino und F. de Filippis, "Error analysis on measurement temperature by means dual-color thermography technique", Measurement, Band 90, S. 265-277, 2016. Da hierbei statt der Absolutwerte das Verhältnis der Strahlungsleistungen für die Temperaturmessung gebildet wird, müssen die Strahlungsleistungen deutlich größer sein. Dies setzt wiederum hohe Temperaturen der betrachteten Objektoberfläche voraus ($T_{obj}$ > 550 K).

Alle bisher vorgestellten Verfahren zur Bestimmung von Emissionsgraden aus dem Stand der Technik sind punktförmige Messverfahren, die den Emissionsgrad somit nur für einen Oberflächenpunkt liefern. Für die korrekte Messung von inhomogenen Objektoberflächen müssen Messungen an mehreren Orten nacheinander durchgeführt werden.

In A. Ianiro und G. Cardone, "Measurement of surface temperature and emissivity with stereo dual-wavelength IR thermography", Journal of Modern Optics, Band 57, Nr. 18, S. 1708-1715, 2010, werden die Fresnel'schen Gleichungen als physikalische Grundlage des Emissionsgrades betrachtet, um die optischen Konstanten des untersuchten Objektes (Brechungsindex n und Extinktionskoeffizient k) als Funktion der Wärmestrahlungsmesswerte zu schätzen. Dabei werden zwei Kameras unterschiedlicher Wellenlänge ortsfest verwendet und die geometrischen Informationen aus vorher bekannten Objektmodellen genutzt, was ein sehr aufwendiges Vorgehen darstellt. Außerdem kann auch bei diesem Verfahren nur ein globaler Emissionsgrad für die gesamte Objektoberfläche berechnet werden.

Bei heutzutage im Stand der Technik verwendeten 3D-Thermografiesystemen wird der Emissionsgrad der Objektoberfläche entweder vernachlässigt oder vorher mittels der zuvor beschriebenen, mit Nachteilen behafteten Verfahren bestimmt, siehe bspw. die Schriften US 8818079 B2 und DE 10 2017 100 885 A1, sowie A. Ordóñez-Müller und A. Kroll, "Generating high fidelity 3-D thermograms with a handheld real-time thermal imaging system", IEEE Sensors Journal, Band 17, Nr. 3, S. 774-783, 2017, und S. Vidas und P. Moghadam, "HeatWave: A handheld 3D thermography system for energy auditing", Energy and Buildings, Band 66, S. 445-460, 2013.

OFFENBARUNG DER ERFINDUNG

Es ist daher die Aufgabe der vorliegenden Erfindung ein Verfahren zum Erzeugen eines dreidimensionalen Thermogramms einer Objektoberfläche vorzuschlagen, bei welchem der lokale Emissionsgrad aus den Daten des Messsystems automatisch mitbestimmt wird.

Diese Aufgabe wird ausgehend von einem Verfahren gemäß Anspruch 1 gelöst. Vorteilhafte Weiterbildungen der Erfindung sind in den abhängigen Ansprüchen angegeben.

Die Erfindung schließt die technische Lehre ein, dass das Verfahren zum Erzeugen des dreidimensionalen Thermogramms wenigstens die folgenden Verfahrensschritte aufweist:

- Erfassen von geometrischen Daten des Objekts und Erstellen eines dreidimensionalen Modells des Objekts anhand der erfassten geometrischen Daten,
- Erfassen von Wärmestrahlungsmesswerten für Aufpunkte auf der Objektoberfläche, wobei je Aufpunkt eine Mehrzahl von Wärmestrahlungsmesswerten aus unterschiedlichen Blickrichtungen auf die Objektoberfläche erfasst wird,
- Zuordnen der Wärmestrahlungsmesswerte für die Aufpunkte auf der Objektoberfläche zu Aufpunkten auf der zugehörigen Oberfläche des dreidimensionalen Modells des Objekts, wobei jedem Wärmestrahlungsmesswert ein Zenitwinkel zwischen der Blickrichtung und der Oberflächennormale im zugehörigen Aufpunkt zugeordnet wird,
- Modellieren des Emissionsgrades der Objektoberfläche ortsaufgelöst je Aufpunkt anhand der Abhängigkeit der Wärmestrahlungsmesswerte von den zugehörigen Zenitwinkeln, und
- Modellieren der Temperatur der Objektoberfläche je Aufpunkt anhand der Wärmestrahlungsmesswerte, der Zenitwinkel und des Emissionsgrades, und Ausgeben des dreidimensionalen Thermogramms.

Der Kerngedanke der Erfindung besteht darin, die Variation des Emissionsgrades mit der Abstrahlrichtung zu seiner Modellierung zu nutzen. Bei dieser Modellierung wird der Emissionsgrad basierend auf den Fresnel'schen Gleichungen als Funktion der Abstrahlrichtung und der isotropen optischen Konstanten des die Objektoberfläche bildenden Materials ausgedrückt. Daraus kann eine Kostenfunktion mit den optischen Konstanten als Optimierungsparametern und der messtechnisch erfassten Variation der Wärmestrahlungsintensität mit dem Abstrahlwinkel als Variablen aufgestellt werden. Die Lösung dieses Optimierungsproblems liefert Werte für die optischen Konstanten in jedem betrachteten Aufpunkt, aus denen dann der lokale Emissionsgrad berechnet und für die quantitativ korrekte Bestimmung der Temperaturverteilung auf der Objektoberfläche eingesetzt werden kann. Eine detaillierte Darstellung der Modellierung von Emissionsgrad- und Temperaturverteilungen wird weiter unten im Zusammenhang mit der Beschreibung der Figuren gegeben.

Mit dem erfindungsgemäßen Verfahren sind Oberflächentemperaturen bei der Benutzung von 3D-Thermografiesystemen erstmalig ohne zusätzlichen manuellen Aufwand, ohne die Nachteile von invasiven oder rückwirkenden Messungen von im Stand der Technik verwendeten Verfahren und ohne vorab benötigte 3D-Objektmodelle quantitativ messbar. Dies führt zu einer signifikanten Erhöhung der Qualität der Messergebnisse und ermöglicht zudem eine weitgehende Automatisierbarkeit der Messung und somit ökonomische Vorteile gegenüber dem Stand der Technik. Im Vergleich zu allen anderen Verfahren kann der Emissionsgrad erfindungsgemäß nicht nur an einer Stelle, sondern an beliebig vielen, innerhalb der Kameraöffnungswinkeln liegenden, Aufpunkten auf der Objektoberfläche gleichzeitig und damit ortsaufgelöst ermittelt werden, was somit auch bei inhomogenen Messobjekten zu belastbaren Oberflächentemperaturmessungen führt.

Derartig berührungslose, rückwirkungsfreie und automatisierte Temperaturmessungen sind in verschiedensten industriellen Anwendungen von großem Interesse. Beispielsweise liefern in der Metall- und Kunststoffverarbeitung die Werkstofftemperaturen bei der Herstellung Aussagen über die Eigenschaften des späteren Werkstücks. Besonders bei Inline-Messungen (bspw. für die Qualitätsüberwachung) muss die Messung in der Taktzeit der Produktion erfolgen und somit sehr schnell sein. Eine Automatisierung kann hier zu zuverlässigen Messungen ohne Verzögerungen im Produktionsprozess führen und Aufschluss über qualitätsbestimmende Produkteigenschaften liefern.

Auch bei der Betrachtung von energieintensiven Anlagen und Maschinen kann der Wärmeverlust und somit der energetische Wirkungsgrad nur mittels absoluter Temperaturwerte der Außenhülle ermittelt werden. Durch die erfindungsgemäße Ermittlung des Emissionsgrades und somit der validen Umrechnung von Objektstrahlung in Oberflächentemperaturen werden Fehler in der Temperaturmessung vermieden. Basierend auf den Temperaturmesswerten und den daraus folgenden Einschätzungen der Anlagenexperten über den Zustand von Maschinen und Anlagen können bessere Entscheidungen bzgl. des Austauschs von Teilen und der Durchführung von Wartungsmaßnahmen getroffen werden.

In vorteilhafter Ausführungsform des erfindungsgemäßen Verfahrens wird das Modellieren des Emissionsgrades und/oder der Temperatur der Objektoberfläche parallel zum Erfassen der Wärmestrahlungsmesswerte durchgeführt. Dadurch ist es möglich, die mit dem ermittelten Emissionsgrad gemessenen Oberflächentemperaturen bereits während der Aufnahme gemäß dem Messfortschritt auszugeben. Damit können bspw. Bereiche mit geringer Messgüte identifiziert und für diese dann direkt vor Ort während des Messvorgangs weitere Messungen ohne zusätzlichen Zeit- und Kostenaufwand durchgeführt werden. Alternativ kann nach der Messung das vollständige 3D-Thermogramm auf Basis des gemessenen Emissionsgrades berechnet und ausgegeben werden.

Vorzugsweise werden beim Erfassen der Wärmestrahlungsmesswerte zusätzlich Daten zu den Aufnahmebedingungen erfasst und es werden jedem Aufpunkt Messgütewerte zugeordnet, wobei die Messgütewerte Auskunft über die Güte der zugehörigen Aufnahmebedingungen geben. Bei diesen zusätzlichen Daten zu den Aufnahmebedingungen kann es sich insbesondere um den Abstand zwischen Thermografie-Kamera und untersuchtem Aufpunkt handeln. Ist dieser Messabstand zu groß gewählt, kann einerseits die laterale Messauflösung ungenügend sein und zudem können atmosphärisch bedingte Absorption und Streuung in unerwünschtem Maße zu den erfassten Wärmestrahlungsmesswerten beitragen. Ein weiteres Kriterium für die Messgüte leitet sich aus den geometrischen Abbildungsfehlern der Optik der Thermografie-Kamera ab. So führen Verzeichnung und Vignettierung zu erhöhten Messfehlern für Pixel im Randbereich des Kamerasensors, und die zugehörigen Messwerte sollten daher nicht berücksichtigt oder zumindest geringer gewichtet werden als solche Messwerte, die im Bereich der optischen Achse in der Sensormitte gewonnen werden.

Die erhobenen Messgütewerte werden vorteilhaft bereits während der Messung mit einem Sollwertbereich verglichen und das Erfassen der Wärmestrahlungsmesswerte für die zugehörigen Aufpunkte wird unter besseren Aufnahmebedingungen wiederholt, falls die Messgütewerte außerhalb des Sollwertbereichs liegen.

Des Weiteren kann jedem Aufpunkt vorteilhaft ein Schätzgütewert zugeordnet werden, wobei der Schätzgütewert Auskunft über die Güte der Modellierung der Temperatur der Objektoberfläche im jeweiligen Aufpunkt gibt. Der Schätzgütewert basiert dabei auf einer Fehleranalyse der der Modellierung zugrundeliegenden numerischen Optimierung einer Kostenfunktion und kann beispielsweise von einer zu geringen Anzahl an zur Verfügung stehenden Messdatensätzen oder einem zu kleinen Signal-zu-Rausch-Abstand in den Messdaten negativ beeinflusst werden. Die ermittelten Schätzgütewerte werden vorteilhaft bereits während der Messung mit einem Sollwertbereich verglichen, und das Erfassen der Wärmestrahlungsmesswerte für die zugehörigen Aufpunkte wird insbesondere unter anderen Azimutwinkeln um die Oberflächennormale im jeweiligen Aufpunkt wiederholt, falls der Schätzgütewert außerhalb des Sollwertbereichs liegt. Die azimutale Variation des Sichtwinkels der Thermografie-Kamera auf den Aufpunkt dient insbesondere dazu, etwaig prominent vorhandene Beiträge von Umgebungsstrahlung aus dem Messsignal zu entfernen und somit dessen Signal-zu-Rausch-Abstand zu verbessern. Als Ursache störender Umgebungsstrahlung ist vor allem die von der Objektoberfläche reflektierte Wärmestrahlung von in der Umgebung vorhandenen weiteren Strahlungsquellen anzuführen. Da derartige Umgebungsstrahlung stark gerichtet auftritt, kann ihr Beitrag durch die erneute Messung unter anderem Azimutwinkel entsprechend reduziert werden.

In weiterer vorteilhafter Ausführungsform des erfindungsgemäßen Verfahrens wird das erzeugte dreidimensionale Thermogramm während der Messung auf die zugehörige Objektoberfläche projiziert. Zu diesem Zwecke muss die verwendete Vorrichtung eine geeignete Projektionseinrichtung aufweisen. Indem das erzeugte Thermogramm auf die Objektoberfläche projiziert wird, kann die Durchführung der Messung erleichtert werden, da ein Nutzer so z. B. auf einfache Weise erfassen kann, über welche Teiloberflächen und jeweils mit welcher Messgüte sich das 3D-Thermogramm bereits erstreckt und für welche Teiloberflächen noch Temperaturmesswerte erfasst werden sollten, um ein vollständiges 3D-Thermogramm des Objekts zu erzeugen.

Vorzugsweise wird das Erfassen der Wärmestrahlungsmesswerte in einem Spektralbereich von Wellenlängen zwischen 7 μm und 14 μm durchgeführt. Für diesen langwelligen Spektralbereich sind günstige IR-Kameras verfügbar, welche im Gegensatz zu Mittelwellen-Kameras keine Sensorkühlung benötigen. Insbesondere ist es im Gegensatz zu Verfahren aus dem Stand der Technik (siehe beispielsweise A. Ianiro und G. Cardone, "Measurement of surface temperature and emissivity with stereo dual-wavelength IR thermography", Journal of Modern Optics, Band 57, Nr. 18, S. 1708-1715, 2010) bei dem erfindungsgemäßen Verfahren nicht erforderlich, Wärmebilder in unterschiedlichen Spektralbereichen aufzunehmen oder auszuwerten.

Die Erfindung betrifft des Weiteren eine Vorrichtung zum Erzeugen eines dreidimensionalen Thermogramms einer Objektoberfläche gemäß dem vorbeschriebenen Verfahren, wozu die Vorrichtung wenigstens folgende Komponenten aufweist:

- einen ersten Sensor zum Erfassen von geometrischen Daten eines Objekts,
- einen zweiten Sensor zum Erfassen von Wärmestrahlungsmesswerten für Aufpunkte auf der Objektoberfläche, und
- eine Datenverarbeitungseinheit, welcher über eine Datenverbindung die erfassten geometrischen Daten, die erfassten Wärmestrahlungsmesswerte und Daten zu den Aufnahmebedingungen zuführbar sind, wobei die Datenverarbeitungseinheit dazu eingerichtet ist,
- anhand der zugeführten Daten des 3D-Sensors ein dreidimensionales Modell des Objekts auf einer Ausgabeeinheit zu erstellen,
- die erfassten Wärmestrahlungsmesswerte für die Aufpunkte auf der Objektoberfläche zu Objektpunkten einer zugehörigen Oberfläche des dreidimensionalen Modells des Objekts zuzuordnen,
- den Emissionsgrad der Objektoberfläche ortsaufgelöst in den Aufpunkten anhand der Zenitwinkelabhängigkeit der zugehörigen Wärmestrahlungsmesswerte zu modellieren, und
- die Temperatur der Objektoberfläche in den Aufpunkten anhand der Wärmestrahlungsmesswerte und des Emissionsgrades zu modellieren, und daraus das dreidimensionale Thermogramm zu erzeugen und auf der Ausgabeeinheit auszugeben.

Ferner umfasst die erfindungsgemäße Vorrichtung vorzugsweise eine Projektionseinheit, mit welcher das erzeugte dreidimensionale Thermogramm auf die zugehörige Objektoberfläche projizierbar ist.

Zudem betrifft die Erfindung ein Computerprogrammprodukt umfassend ein Simulationsprogramm zur Ausführung von wenigstens den folgenden Verfahrensschritten des erfindungsgemäßen Verfahrens:

- Erstellen des dreidimensionalen Modells des Objekts anhand der erfassten geometrischen Daten,
- Zuordnen der Wärmestrahlungsmesswerte für die Aufpunkte auf der Objektoberfläche zu Aufpunkten auf der zugehörigen Oberfläche des dreidimensionalen Modells des Objekts,
- Modellieren des Emissionsgrades der Objektoberfläche ortsaufgelöst je Aufpunkt anhand der Zenitwinkelabhängigkeit der zugehörigen Wärmestrahlungsmesswerte, und
- Modellieren der Temperatur der Objektoberfläche je Aufpunkt anhand der Wärmestrahlungsmesswerte und des Emissionsgrades.

BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:

Fig. 1  eine Illustration der erfindungsgemäßen Messwerterfassung mit einer erfindungsgemäßen Vorrichtung, und
Fig. 2  ein Prozessschritt-Diagramm des erfindungsgemäßen Verfahrens.

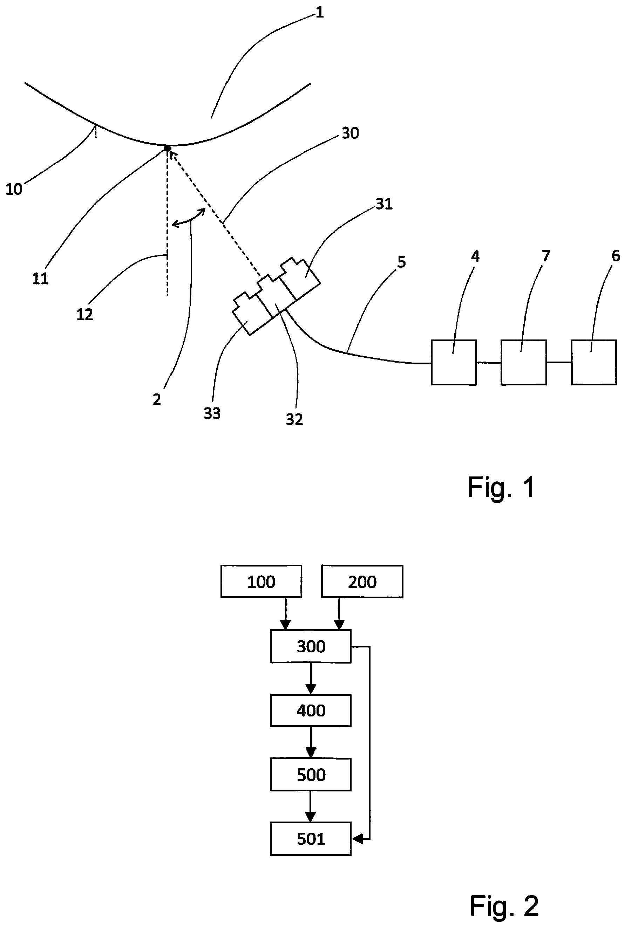

Fig. 1 zeigt eine Illustration der erfindungsgemäßen Messwerterfassung mit einer erfindungsgemäßen Vorrichtung an der gekrümmten Oberfläche 10 eines Objekts 1. Die Vorrichtung umfasst den ersten Sensor 31 zur Erfassung der geometrischen Objektdaten, den zweiten Sensor 32 zur Erfassung der Wärmestrahlungsmesswerte und die Projektionseinrichtung 33 zur Projektion des erzeugten Thermogramms auf die Objektoberfläche 10, des Weiteren die Datenverarbeitungseinrichtung 4, welche über die, hier beispielhaft kabelbasiert dargestellte, Datenverbindung 5 mit den Sensoren 31 und 32 verbunden ist, sowie das Speichermedium 7 und die Ausgabeeinheit 6 zur weiteren Ausgabe von Messergebnissen und -daten. Die dem erfindungsgemäßen Verfahren entsprechende Erzeugung eines dreidimensionalen Thermogramms mit der erfindungsgemäßen Vorrichtung wird im Folgenden in der Zusammenschau von Fig. 1 und Fig. 2 dargestellt.

Bei der 3D-Thermografie werden die in den Verfahrensschritten 100 und 200 mit den zwei Sensoren 31 und 32 erfassten Daten zu Geometrie und Wärmestrahlung des Objekts 1 miteinander fusioniert, um in einem Verfahrensschritt 300 ein 3D-Modell des Objekts 1 mit überlagerter thermischer Textur zu erhalten. Dafür ist der erste Sensor 31 zur Gewinnung der 3D-Geometriedaten beispielsweise als eine Stereokamera, eine Tiefenkamera (basierend bspw. auf Musterprojektion oder Time-of-Flight) oder als ein Laserscanner ausgebildet. Ist das 3D-Modell des Objekts 1 bereits bekannt, kann auf einen 3D-Sensor 31 verzichtet werden, sofern die Lage der anderen Sensorik 32 in Bezug auf das Objekt 1 immer bekannt ist, was durch automatisierte Verfahrbewegungen des Messsystems erreicht werden kann. Als zweiter Sensor 32 für die thermischen Daten wird typischerweise eine Infrarotkamera verwendet, es können aber prinzipiell auch mittels zweier Infrarotkameras thermische und geometrische Informationen gleichzeitig gemessen werden. Vorzugsweise misst der zweite Sensor 32 im langwelligen Spektralbereich, insbesondere bei Wellenlängen der Wärmestrahlung zwischen 7 $\mu$m und 14 $\mu$m. Um die Daten der verschiedenen und zueinander starren Sensoren 31 und 32 in dem Verfahrensschritt 300 überlagern zu können, wird eine extrinsische geometrische Kalibrierung der Sensoren 31 und 32 benötigt. Dabei werden die Translationen und Rotationen zwischen den einzelnen lokalen Koordinatensystemen bestimmt, sodass in der Folge die Daten in ein gemeinsames Koordinatensystem überführt werden können. In der in Fig. 1 skizzierten Ausführungsvariante wird eine 3D-Tiefenkamera 31 in Verbindung mit einer kompakten Infrarotkamera 32 verwendet, um ein händisch bewegbares Messsystem zu erhalten. Alternativ zu dem beschriebenen Ausführungsbeispiel ist die Bewegung des Messsystems auf Schienen-/Achsensystemen, mittels mobiler Roboter oder Manipulatoren (wie Knick-Arm-Roboter) möglich. Zudem sind Anwendungsfälle denkbar, in denen die Sensoren 31 bis 33 ortsfest montiert sind und das Objekt 1 relativ dazu bewegt wird, beispielsweise bei der Temperaturmessung an auf einem bewegten Förderband angeordneten Werkstücken.

In der Datenverarbeitungseinrichtung 4 werden die von den Sensoren 31 und 32 erfassten Daten im Verfahrensschritt 300 zu einem 3D-Wärmebild zusammengefügt. Dabei werden die Daten des 3D-Sensors 31 und der Thermografiekamera 32 in jedem Zeitschritt fusioniert, sodass jedem Punkt der Punktwolke im Messraum (wenn möglich) ein Wärmestrahlungsmesswert zugewiesen wird. In aufeinander folgenden Zeitschritten werden dann die thermischen Punktwolken zu einem gesamten thermischen 3D-Modell zusammengeführt, indem diese miteinander registriert werden. Führt nun der Anwender oder ein Bewegungssystem die Sensorik 31 und 32 um das zu messende Objekt 1, werden aus verschiedenen Blickwinkeln aufgenommene Messwerte überlagert. Um in der Datenverarbeitungseinrichtung 4 ausreichend freie Speicherkapazität vorzuhalten, wird das dreidimensionale Modell des Objektes 1 vorzugsweise in dem separaten Speichermedium 7 gespeichert und jeweils nur die Teiloberfläche des dreidimensionalen Modells in die Datenverarbeitungseinrichtung 4 geladen, welche zur Modellierung der Temperaturverteilung in den gewählten Aufpunkten benötigt wird. Bis hierher entspricht das Vorgehen dem Stand der Technik gemäß A. Ordóñez-Müller und A. Kroll, "Generating high fidelity 3-D thermograms with a handheld real-time thermal imaging system", IEEE Sensors Journal, Band 17, Nr. 3, S. 774-783, 2017.

Daran setzt das nachgeschaltete Modellieren 400 des Emissionsgrades an, um aus dem 3D-Modell mit unbekanntem Emissionsgrad ein quantitativ korrektes 3D-Thermogramm abzuleiten. Durch die Kenntnis des Emissionsgrades der Objektoberfläche 10 kann der Strahlungsanteil des Messobjekts 1 von den Strahlungsanteilen der Umgebung separiert werden. Mittels der bekannten radiometrischen Kalibrierung der Thermografiekamera 32 wird anschließend die gemessene Wärmestrahlungsleistung des Messobjekts 1 in dessen Oberflächentemperatur überführt und ein voll quantitatives 3D-Thermogramm ausgegeben, was den Verfahrensschritten 500 und 501 entspricht. Dazu werden im Rahmen des erfindungsgemäßen Verfahrens Punkte des 3D-Modells automatisiert ausgewählt und für zugehörige Aufpunkte 11 auf der Objektoberfläche 10 die strahlungsproportionalen Grauwerte der Thermografiekamera 32 aus unterschiedlichen Zenitwinkeln 2 zwischen der Kameraachse 30 und der Oberflächennormale 12 im Aufpunkt 11 aufgezeichnet, wozu im Zuge der Verfahrensschritte 100 und 200 das Messsystem aus den Sensoren 31 und 32 um die ausgewählten Aufpunkte 11 geschwenkt wird. Beim Zuordnen 300 der Wärmestrahlungsmesswerte für die Aufpunkte 11 auf der Objektoberfläche zu Aufpunkten auf der zugehörigen Oberfläche des dreidimensionalen Modells wird daher jedem Wärmestrahlungsmesswert auch der entsprechende Zenitwinkel 2 zugeordnet und an die Emissionsgradmodellierung 400 übergeben. Da typischerweise erst bei sehr großen Zenitwinkeln 2 eine signifikante Verringerung des Emissionsgrades auftritt, werden vorzugsweise Zenitwinkel 2 von bis zu 85° berücksichtigt.

Die im Verfahrensschritt 300 erzeugten Daten zu Wärmestrahlungsmesswerten (Grauwerte $U_{D,i}$) und zugehörigen Zenitwinkeln $\theta_i$ für jeden Aufpunkt 11 dienen als Basis für die mathematische Modellierung 400 und 500 von Emissionsgrad $\varepsilon_i$ und Objekttemperatur $T_{obj,i}$ bei der $i$-ten von N Messungen. Aus der wohlbekannten radiometrischen Kalibrierfunktion für Infrarotkameras geht hervor:

$$T_{\text{obj},i}\left(U_{\text{D},i}, \varepsilon_i\right) = \cfrac{B}{\ln\left(\cfrac{\cfrac{R}{U_{\text{D},i} - (1 - \varepsilon_i)\left(\cfrac{R}{e^{B/T_{\text{amb},i}} - F} + O\right)} + F}{\varepsilon_i} - O\right)}$$

mit den Kalibrierparametern $B$, $F$, O, R und der Umgebungstemperatur $T_{\text{amb},i}$. Die Kalibrierparameter der Infrarotkamera 32 sind dabei bekannt und werden typischerweise bereits herstellerseitig zur Verfügung gestellt.

Der Emissionsgrad $\varepsilon_i$ kann für opake Körper (Transmissionsgrad r = 0) wiederum als Funktion des Zenitwinkels $\theta_i$ und der beiden optischen Konstanten Brechungsindex n und Extinktionskoeffizient $k$ als Materialparameter des untersuchten Objektes aus der Fresnel'schen Formel für den Reflexionsgrad $\rho$ modelliert werden:

$$\varepsilon_i(\theta_i) = 1 - \rho(\theta_i) = \frac{\rho_\perp(\theta_i) + \rho_\parallel(\theta_i)}{2}$$

mit:

$$\rho_\perp(\theta_i) = \frac{a^2 + b^2 - 2a\cos(\theta_i) + \cos^2(\theta_i)}{a^2 + b^2 + 2a\cos(\theta_i) + \cos^2(\theta_i)}$$

$$\rho_\parallel(\theta_i) = \frac{a^2 + b^2 - 2a\sin(\theta_i)\tan(\theta_i) + \sin^2(\theta_i)\tan^2(\theta_i)}{a^2 + b^2 + 2a\sin(\theta_i)\tan(\theta_i) + \sin^2(\theta_i)\tan^2(\theta_i)}\rho_\perp(\theta_i)$$

$$a^2 = \frac{1}{2}\left[\sqrt{\left(n^2 - k^2 - \sin^2(\theta_i)\right)^2 + 4n^2k^2} + n^2 - k^2 - \sin^2(\theta_i)\right]$$

$$b^2 = \frac{1}{2}\left[\sqrt{\left(n^2 - k^2 - \sin^2(\theta_i)\right)^2 + 4n^2k^2} - n^2 - k^2 - \sin^2(\theta_i)\right]$$

Daraus folgt:

$$T_{\text{obj},i}\left(U_{\text{D},i}, \varepsilon_i\right) = T_{\text{obj},i}\left(U_{\text{D},i}, \theta_i, n, k\right)$$

Ist während der Aufnahmedauer die Temperatur der Objektoberfläche konstant, kann je Aufpunkt für das Modell eine Kostenfunktion zur Optimierung aufgestellt werden:

$$\underset{n,k}{\arg\min}\left(\sum_{i=1}^{N}\left(\overline{T_{\text{obj}}\left(U_{\text{D},i}, \theta_i, n, k\right)} - T_{\text{obj},i}\left(U_{\text{D},i}, \theta_i, n, k\right)\right)^2\right)$$

mit:

$$\bar{x} := \frac{1}{n} \sum_{i=1}^{n} x_i$$

Neben der hier dargelegten quadratischen Kostenfunktion sind auch andere Bewertungsfunktionen (bspw. betragslinear) zur Beschreibung der Abweichung aus Einzelmesswerten und arithmetischem Mittelwert möglich. Sofern Informationen über das Material der untersuchten Objektoberfläche vorliegen, können daraus gegebenenfalls geeignete Startwerte für die Parameter n und k abgeleitet werden. Ansonsten wird die Optimierung basierend auf verschiedenen, üblichen Werten der optischen Konstanten mehrfach gestartet. Nach der numerischen Lösung der Optimierungsproblem für jeden einzelnen betrachteten Aufpunkt wird aus den gewonnenen Parametern n und k der Emissionsgrad zurückgerechnet und an die 3D-Modellierung übergeben. Dort kann aufgrund der Kenntnis des Emissionsgrades nun die korrekte Temperaturverteilung der Oberfläche als Verfahrensschritt 500 berechnet werden.

Als Einschränkung für die Emissionsgradschätzung sind vor allem die folgenden beiden Punkte zu nennen. Da in die radiometrische Kalibrierfunktion auch die Umgebungstemperatur $T_{amb}$ eingeht, muss diese über alle Austrittswinkel zwischen Kamera 32 und Oberfläche 10 bekannt sein oder gemessen werden. Mit der Umgebungstemperatur ist dabei nicht die Temperatur der Atmosphäre gemeint, sondern die Temperatur eines weiteren Objekts oder von Hintergrundstrahlung, dessen Temperaturstrahlung vom eigentlichen Messobjekt 1 reflektiert wird und in die Thermografiekamera 32 einfällt. Um die Lösbarkeit des Optimierungsproblems zu gewährleisten, muss ein ausreichend großer Kontrast zwischen Objekt- und Umgebungstemperatur vorhanden sein. Dieser kann gegebenenfalls durch azimutales Verschwenken der Kamera 32 um die Oberflächennormale 12 maximiert werden. Zweitens gilt der zugrundeliegende physikalische Zusammenhang zwischen Oberflächenemissionsgrad, Brechungsindex, Extinktionskoeffizient sowie Abstrahlwinkel nur für opake Körper. Dies ist für die meisten technischen Anwendungsfälle jedoch gegeben, da nur wenige Festkörper wie Gläser und einige Kunststoffe im infraroten Spektralbereich transmittieren.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

Bezugszeichenliste:

1     Objekt
10    Objektoberfläche
11    Aufpunkt
12    Oberflächennormale
2     Zenitwinkel
30    Blickrichtung
31    erster Sensor
32    zweiter Sensor
33    Projektionseinrichtung
4     Datenverarbeitungseinrichtung
5     Datenverbindung
6     Ausgabeeinheit
7     Speichermedium
100   Erfassen der geometrischen Daten
200   Erfassen der Wärmestrahlungsmesswerte
300   Zuordnen der Wärmestrahlungsmesswerte zu 3D-Modell
400   Modellieren des Emissionsgrades
500   Modellieren der Temperatur
501   Ausgeben des dreidimensionalen Thermogramms

**Patentansprüche**

**1.**   Verfahren zum Erzeugen eines dreidimensionalen Thermogramms einer Objektoberfläche (10) wenigstens umfassend die folgenden Verfahrensschritte:

- Erfassen (100) von geometrischen Daten eines Objekts (1) und Erstellen eines dreidimensionalen Modells des Objekts (1) anhand der erfassten geometrischen Daten,
- Erfassen (200) von Wärmestrahlungsmesswerten für Aufpunkte (11) auf der Objektoberfläche (10), wobei je Aufpunkt (11) eine Mehrzahl von Wärmestrahlungsmesswerten aus unterschiedlichen Blickrichtungen (30) auf die Objektoberfläche (10) erfasst wird,
- Zuordnen (300) der Wärmestrahlungsmesswerte für die Aufpunkte (11) auf der Objektoberfläche zu Aufpunkten auf der zugehörigen Oberfläche des dreidimensionalen Modells des Objekts (1), wobei jedem Wärmestrahlungsmesswert ein Zenitwinkel (2) zwischen der Blickrichtung (30) und der Oberflächennormale (12) im zugehörigen Aufpunkt (11) zugeordnet wird,
- Modellieren (400) des Emissionsgrades der Objektoberfläche (10) ortsaufgelöst je Aufpunkt (11) anhand der Abhängigkeit der Wärmestrahlungsmesswerte von den zugehörigen Zenitwinkeln (2), und
- Modellieren (500) der Temperatur der Objektoberfläche (10) je Aufpunkt (11) anhand der Wärmestrahlungsmesswerte, der Zenitwinkel (2) und des Emissionsgrades, und Ausgeben (501) des dreidimensionalen Thermogramms.

2. Verfahren nach Anspruch 1,
**dadurch gekennzeichnet,**
**dass** das Modellieren (400) des Emissionsgrades und/oder der Temperatur der Objektoberfläche (10) parallel zum Erfassen (200) der Wärmestrahlungsmesswerte durchgeführt wird.

3. Verfahren nach Anspruch 1 oder 2,
**dadurch gekennzeichnet,**
**dass** beim Erfassen (200) der Wärmestrahlungsmesswerte zusätzlich Daten zu den Aufnahmebedingungen erfasst werden und jedem Aufpunkt (11) Messgütewerte zugeordnet werden, wobei die Messgütewerte Auskunft über die Güte der Aufnahmebedingungen beim Erfassen (200) der zugehörigen Wärmestrahlungsmesswerte geben.

4. Verfahren nach Anspruch 3,
**dadurch gekennzeichnet,**
**dass** jeder Messgütewert mit einem Sollwertbereich verglichen wird und das Erfassen (200) der Wärmestrahlungsmesswerte für den zugehörigen Aufpunkt (11) unter besseren Aufnahmebedingungen wiederholt wird, falls der Messgütewert außerhalb des Sollwertbereichs liegt.

5. Verfahren nach einem der vorgenannten Ansprüche,
**dadurch gekennzeichnet,**
**dass** jedem Aufpunkt (11) ein Schätzgütewert zugeordnet wird, wobei der Schätzgütewert Auskunft über die Güte der Modellierung (500) der Temperatur der Objektoberfläche (10) im jeweiligen Aufpunkt (11) gibt.

6. Verfahren nach Anspruch 5,
**dadurch gekennzeichnet,**
**dass** jeder Schätzgütewert mit einem Sollwertbereich verglichen wird und das Erfassen (200) der Wärmestrahlungsmesswerte für den zugehörigen Aufpunkt (11) unter anderen Azimutwinkeln um die Oberflächennormale (12) im Aufpunkt (11) wiederholt wird, falls der Schätzgütewert außerhalb des Sollwertbereichs liegt.

7. Verfahren nach einem der vorgenannten Ansprüche,
**dadurch gekennzeichnet,**
**dass** das erzeugte dreidimensionale Thermogramm auf die zugehörige Objektoberfläche (10) projiziert wird.

8. Verfahren nach einem der vorgenannten Ansprüche,
**dadurch gekennzeichnet,**
**dass** Erfassen (200) der Wärmestrahlungsmesswerte in einem Spektralbereich von Wellenlängen zwischen 7 Mikrometern und 14 Mikrometern durchgeführt wird.

9. Vorrichtung zum Erzeugen eines dreidimensionalen Thermogramms einer Objektoberfläche (10) mit

- einem ersten Sensor (31) zum Erfassen (100) von geometrischen Daten eines Objekts (1),
- einem zweiten Sensor (32) zum Erfassen (200) von Wärmestrahlungsmesswerten für Aufpunkte (11) auf der Objektoberfläche (10),
- einer Datenverarbeitungseinheit (4), welcher über eine Datenverbindung (5) die erfassten geometrischen Daten, die erfassten Wärmestrahlungsmesswerte und Daten zu den Aufnahmebedingungen zuführbar sind,

wobei die Datenverarbeitungseinheit (4) dazu eingerichtet ist,

- anhand der zugeführten geometrischen Daten ein dreidimensionales Modell des Objekts (1) auf einer Ausgabeeinheit (6) zu erstellen (101),
- die erfassten Wärmestrahlungsmesswerte für die Aufpunkte (11) auf der Objektoberfläche (10) zu Objektpunkten einer zugehörigen Oberfläche des dreidimensionalen Modells des Objekts (1) zuzuordnen (300),
- den Emissionsgrad der Objektoberfläche (10) ortsaufgelöst in den Aufpunkten (11) anhand der Abhängigkeit der Wärmestrahlungsmesswerte von den zugehörigen Zenitwinkeln (2) zu modellieren (400), und
- die Temperatur der Objektoberfläche (10) in den Aufpunkten (11) anhand der Wärmestrahlungsmesswerte und des Emissionsgrades zu modellieren (500), und daraus das dreidimensionale Thermogramm zu erzeugen (501) und auf der Ausgabeeinheit (6) auszugeben.

**10.** Vorrichtung nach Anspruch 8,
**dadurch gekennzeichnet,**
**dass** eine Projektionseinheit (33) vorgesehen ist, mit welcher das erzeugte dreidimensionale Thermogramm auf die zugehörige Objektoberfläche (10) projizierbar ist.

**11.** Computerprogrammprodukt umfassend ein Simulationsprogramm zur Ausführung von wenigstens den folgenden Verfahrensschritten eines Verfahrens nach einem der Ansprüche 1 bis 7:

- Erstellen (101) des dreidimensionalen Modells des Objekts (1) anhand der erfassten geometrischen Daten,
- Zuordnen (300) der Wärmestrahlungsmesswerte für die Aufpunkte (11) auf der Objektoberfläche (10) zu Aufpunkten auf der zugehörigen Oberfläche des dreidimensionalen Modells des Objekts (1),
- Modellieren (400) des Emissionsgrades der Objektoberfläche (10) ortsaufgelöst je Aufpunkt (11) anhand der Abhängigkeit der Wärmestrahlungsmesswerte von den zugehörigen Zenitwinkeln (2), und
- Modellieren (500) der Temperatur der Objektoberfläche (10) je Aufpunkt (11) anhand der Wärmestrahlungsmesswerte und des Emissionsgrades.

Fig. 1

Fig. 2

**Europäisches Patentamt**
**European Patent Office**
**Office européen des brevets**

# EUROPÄISCHER RECHERCHENBERICHT

Nummer der Anmeldung

EP 20 16 6616

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2017 100885 A1 (UNIV KASSEL [DE]) 19. Juli 2018 (2018-07-19) * Ansprüche 1-4 * ----- | 1-11 | INV. G01J5/00 |
| A | GENNARO CARDONE ET AL: "Temperature maps measurements on 3D surfaces with infrared thermography", EXPERIMENTS IN FLUIDS ; EXPERIMENTAL METHODS AND THEIR APPLICATIONS TO FLUID FLOW, SPRINGER, BERLIN, DE, Bd. 52, Nr. 2, 24. November 2011 (2011-11-24), Seiten 375-385, XP035005777, ISSN: 1432-1114, DOI: 10.1007/S00348-011-1225-9 * formula 14; Absatz [0003] * ----- | 1-11 | |
| A | YUAN HANG ET AL: "Modeling of the mid-wave infrared radiation characteristics of the sea surface based on measured data", INFRARED PHYSICS AND TECHNOLOGY, ELSEVIER SCIENCE, GB, Bd. 93, 4. Juli 2018 (2018-07-04), Seiten 1-8, XP085471446, ISSN: 1350-4495, DOI: 10.1016/J.INFRARED.2018.07.005 * Absätze [0003], [0004] * ----- | 1-11 | RECHERCHIERTE SACHGEBIETE (IPC)  G01J |

Der vorliegende Recherchenbericht wurde für alle Patentansprüche erstellt

| Recherchenort | Abschlußdatum der Recherche | Prüfer |
|---|---|---|
| München | 14. September 2020 | Rödig, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 16 6616

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-09-2020

| Im Recherchenbericht angeführtes Patentdokument | Datum der Veröffentlichung | Mitglied(er) der Patentfamilie | Datum der Veröffentlichung |
|---|---|---|---|
| DE 102017100885 A1 | 19-07-2018 | DE 102017100885 A1 | 19-07-2018 |
| | | EP 3571462 A1 | 27-11-2019 |
| | | US 2019390954 A1 | 26-12-2019 |
| | | WO 2018133890 A1 | 26-07-2018 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8818079 B2
- DE 102017100885 A1

**In der Beschreibung aufgeführte Nicht-Patentliteratur**

- **R. P. MADDING.** Emissivity measurement and temperature correction accuracy considerations. *Thermosense XXI,* 1999, vol. 3700, 393-402
- **M. VOLLMER ; K.-P. MÖLLMANN.** Infrared Thermal Imaging: Fundamentals, Research and Applications. Wiley-VCH, 2018
- **T. ZIMMERMANN ; M. ZIMMERMANN.** Lehrbuch der Infrarotthermografie. Stuttgart: Fraunhofer IRB Verlag, 2012
- **D. HERNANDEZ ; J. BADIE ; F. ESCOURBIAC ; R. REICHTE.** Development of two-colour pyroreflectometry technique for temperature monitoring of tungsten plasma facing components. *Fusion Engineering and Design,* 2008, vol. 83 (4), 672-679
- **T. SENTENAC ; R. GILBLAS ; D. HERNANDEZ ; Y. LE MAOULT.** Bi-color near infrared thermoreflectometry: A method for true temperature field measurement. *Review of Scientific Instruments,* 2012, vol. 83 (12), 1-14
- **PETROCELLI, T. SENTENAC ; Y. LE MAOULT.** 3D Thermal Imaging: An approach towards true field temperature measurement. *12th Quantitative Infra-Red Thermography Conference,* 2014
- **R. ALBATICI ; F. PASSERINI ; A. M. TONELLI ; S. GIALANELLA.** Assessment of the thermal emissivity value of building materials using an infrared thermovision technique emissometer. *Energy and Buildings,* 2013, vol. 66, 33-40
- **J.-P. MONCHAU ; M. MARCHETTI ; L. IBOS ; J. DUMOULIN ; V. FEUILLET ; Y. CANDAU.** Infrared emissivity measurements of building and civil engineering materials: a new device for measuring emissivity. *International Journal of Thermophysics,* 2014, vol. 35 (9-10), 1817-1831
- **M. MUSTO ; G. ROTONDO ; M. DE CESARE ; A. DEL VECCHIO ; L. SAVINO ; F. DE FILIPPIS.** Error analysis on measurement temperature by means dual-color thermography technique. *Measurement,* 2016, vol. 90, 265-277
- **A. LANIRO ; G. CARDONE.** Measurement of surface temperature and emissivity with stereo dual-wavelength IR thermography. *Journal of Modern Optics,* 2010, vol. 57 (18), 1708-1715
- **A. ORDÓÑEZ-MÜLLER ; A. KROLL.** Generating high fidelity 3-D thermograms with a handheld real-time thermal imaging system. *IEEE Sensors Journal,* 2017, vol. 17 (3), 774-783
- **S. VIDAS ; P. MOGHADAM.** HeatWave: A handheld 3D thermography system for energy auditing. *Energy and Buildings,* 2013, vol. 66, 445-460